# EUROPÄISCHE PATENTSCHRIFT

(11) **EP 0 616 838 B1**
(45) Veröffentlichungstag und Bekanntmachung des Hinweises auf die Patenterteilung: **19.08.1998**
(21) Anmeldenummer: 94104066.9
(22) Anmeldetag: 16.03.1994
(51) Int. Cl.: B01D 65/02, B08B 7/00, B01D 11/02

(54) **Verfahren zum Reinigen von Hohlfasern**
Hollow fibers cleaning process
Procédé pour le nettoyage de fibres creuses

(30) Priorität: 25.03.1993 DE 4309734
(43) Veröffentlichungstag der Anmeldung: 28.09.1994
(73) Patentinhaber: Akzo Nobel N.V., 6824 BM Arnhem (NL)
(72) Erfinder: Ansorge, Wolfgang, Dr., D-45133 Essen (DE); Hornscheidt, Ralf, D-42551 Velbert (DE); Jungheim, Andreas, D-42655 Solingen (DE); Müller, Klaus, Dr., D-42389 Wuppertal (DE)
(74) Vertreter: Fett, Günter, Dipl.-Ing.

(56) Entgegenhaltungen:
- EP-A- 0 518 653
- EP-A- 0 587 168
- EP-A- 0 587 169
- WO-A-84/02291
- WO-A-93/12161
- DE-A- 3 004 933
- DE-A- 3 904 513

## Beschreibung

Die Erfindung betrifft ein Verfahren zum Entfernen eines Lumenfüllers und/oder unerwünschter Prozeßhilfsstoffe aus Hohlfasern oder Hohlfasermembranen. Die Erfindung betrifft ebenfalls die nach diesem Verfahren von einem Lumenfüller und/oder unerwünschter Prozeßhilfsstoffe befreiten Hohlfasern oder Hohlfasermembranen.

Hohlfasern bzw. Hohlfasermembranen und ihre Verwendung im technischen oder medizinischen Bereich sind seit längerem bekannt. Solche Hohlfasern werden nach bekannten Spinnprozessen hergestellt, wobei während der Spinnung zur Stabilisierung des Lumens der Hohlfasern diese immer mit einer Innenfüllung (Lumenfüller) gesponnen werden müssen. Dieser Lumenfüller kann ein gasförmiger oder auch ein flüssiger Stoff sein.

Die meisten handelsüblichen Hohlfasermembranen werden gegenwärtig mit flüssigen Lumenfüllern, insbesondere mit Isopropylmyristat (IPM) oder ähnlichen Verbindungen zur Lumenstabilisierung hergestellt.

Isopropylmyristat ist wegen seiner Nichtlöslichkeit in Wasser und seiner nicht-toxischen Eigenschaften hervorragend als Lumenfüller bzw. Lumenstabilisator geeignet, insbesondere bei der Herstellung von cellulosischen Hohlfäden, die bekanntlicherweise in wäßrigen Systemen hergestellt werden. Isopropylmyristat zeichnet sich weiterhin durch eine vorteilhafte Handhabung aus. Wie alle anderen flüssigen Lumenfüller auch, muß der Lumenfüller vor einer späteren Anwendung solcher Hohlfasern im medizinischen und größtenteils auch im technischen Bereich entfernt werden. Insbesondere bei den im medizinischen Bereich (Hämodialyse, Hämofiltration, Sterilfiltration, Plasmapherese etc.) verwendeten Hohlfasern muß dies vor der Sterilisation der Hohlfasern geschehen. Dabei muß insbesondere beachtet werden, daß der in vielen Fällen zugesetzte übliche Porenstabilisator Glycerin oder andere Polyole aus der Membran nicht entfernt werden. Ebenso dürfen andere Hilfsstoffe wie etwa Hydrophilierungsmittel (beispielsweise Polyvinylpyrrolidon, Polyethylenglykol) aus der Membran nicht entfernt werden, da diese z.B. zur Stabilisierung der Membran beitragen. Entfernt werden aus der fertigen Membran müssen jedoch unerwünschte Prozeßhilfsstoffe (Verdicker, Fällmittel etc.), da die Membran sonst im entsprechenden Anwendungsbereich nicht eingesetzt werden kann.

Auch darf das Membranpolymer chemisch nicht verändert werden und muß insbesondere die Struktur der Membran erhalten bleiben.

Bisher waren für die Entfernung von Innenfüllungen aus Hohlfasern vor allem Fluorchlorkohlenwasserstoffe, wie etwa Freon (R 113) oder Kaltron eingesetzt worden (DE-A-28 18 214). Diese führen in jedem Fall zu einer Auswaschung des vorher eingesetzen Lumenfüllers, wie etwa Isopropylmyristat. Im Rahmen der Umweltproblematik (Schädigung der Ozonschicht etc.) ist jedoch davon auszugehen, daß solche Fluorchlorkohlenwasserstoffe in absehbarer Zeit nicht mehr eingesetzt werden dürfen. Es stellt sich also die Frage nach einem Ersatzmittel, das ebenso wie die Fluorchlorkohlenwasserstoffe in der Lage ist, den Lumenfüller in einem solchen Maße aus dem Hohlfaden zu entfernen, daß die verbleibende Restmenge der zu entfernenden Substanzen die Weiterverarbeitung der Membran und die spätere Nutzung nicht negativ beeinflussen.

Als Alternative zu den Fluorkohlenwasserstoffen sind bereits Hexan-, Cyclohexan-, N-Octan oder verschiedene Glycerin-Alkohol-Gemische verwendet worden. Abgesehen davon, daß diese Stoffe teilweise eine nicht so starke Reinigungswirkung wie die Fluorchlorkohlenwasserstoffe aufweisen, haben sie auch den Nachteil der Brennbarkeit und der Bildung von explosiven Gemischen mit Luft.

Gemäß der DD-A-289 206 und DD-A-289 207 können Hohlfasern auch mit Wasser gereinigt werden, sofern es sich um einen durch Wasser verdrängbaren Lumenfüller handelt, und das Membranpolymer gegenüber Wasser inert ist.

Das Spülen von Hohlfasern mit einem Gas, das unter Druck in einer Flüssigkeit gelöst ist, ist in der NL-A-76 04 567 beschrieben, während Spülungen mit Gasen etwa in der US-A-4,540,490, US-A-4,935,143, JP 54067574 und der PCT/WO 85 01449 behandelt werden. Diesen Verfahren haftet jedoch der Nachteil an, sich auf spezielle Lumenfüller und Hohlfasertypen zu beschränken.

Es war daher Aufgabe der Erfindung, ein Verfahren zur Verfügung zu stellen, mit dem es möglich ist, Hohlfasern (d.h. das fertige Produkt) vom Lumenstabilisator (Lumenfüller) und/oder unerwünschten Prozeßhilfsstoffen, wie sie zuvor definiert wurden, zu befreien, ohne daß Fluorchlorkohlenwasserstoffe oder ähnliche Halogenverbindungen eingesetzt werden müssen. Es war ebenfalls Aufgabe der Erfindung, ein Verfahren zu finden, das die bisherigen Nachteile und Umweltprobleme vermeidet und das sich bei den verschiedenartigsten Hohlfasertypen und Arten von Lumenfüllern einsetzen läßt.

Diese Aufgabe wird bei einem Verfahren gemäß dem Oberbegriff von Anspruch 1 dadurch gelöst, daß die Hohlfasern oder Hohlfasermembranen mit bestimmten, im Kenn zeichen definierten, überkritischen Gasen extrahiert werden.

Unter einem überkritischen Gas im Sinne der Erfindung wird dabei ein solches verstanden, bei dem ein Gas, beispielsweise CO₂, bei einer Temperatur von z.B. mindestens 35°C und einem Druck von über 74 bar und einer Dichte von mindestens 200 kg/m³ eingesetzt wird (Römpp Chemie Lexikon, 9. Auflage 1992 (Band 6), Seite 4790, und dort zitierte Literatur). Unter diesen Bedingungen ist das Kohlendioxid überkritisch und hat völlig andere Eigenschaften als das normale gasförmige oder auch flüssige Kohlendioxid. Wann das entsprechende Gas den überkritischen Punkt erreicht, hängt von der Art des verwendeten Gases sowie vom Druck und Temperatur ab.

Als überkritische Gase für das erfindungsgemäße Verfahren werden bevorzugt CO₂, H₂O, N₂, NH₃, N₂O, N₂O₂, CH₃OH, CHF₃, Propan, n-Butan, Ethylen, Toluol oder Gemische hiervon verwendet.

Gemäß einer weiteren Ausführungsform der Erfindung ist es aber auch möglich, dem überkritischen Gas Flüssigkeiten oder Lösungsmittel zuzusetzen.

Bevorzugt handelt es sich dabei um Methanol oder Wasser.

Das erfindungsgemäße Verfahren läßt sich durchführen an Hohlfasern aus den üblichen Polymeren, die nicht in den verwendeten in überkritischem Zustand befindlichen Extraktionsmitteln oder Gemischen derselben mit Lösungsmitteln oder Flüssigkeiten löslich sind. Hier sind bevorzugt zu nennen Cellulose bzw. regenerierte Cellulose sowie deren Derivate wie Celluloseacetat oder andere Modifikationen, aber auch Polyolefine wie Polyethylen und Polypropylen, Polysulfone wie Polyethersulfone, Polyacrylnitrilehomopolymere und -copolymere, Polyamide usw. sind geeignet.

Die Einwirkzeit der überkritschen Gases ist nicht kritisch, sie kann etwa zwischen 1 und 500 Minuten, vorzugsweise zwischen 20 und 240 Minuten betragen.

Gemäß einer bevorzugten Ausführungsform der Erfindung wird ein Hohlfaserbündel extrahiert. Das Hohlfadenbündel enthält eine Vielzahl einzelner Hohlfäden, beispielsweise 7000 Hohlfäden, im Minimum aber zwei Hohlfäden.

Bei der Verwendung von CO₂ als bevorzugtes Gas liegt ein Druck von mindestens 73 bar, vorzugsweise von mindestens 100 bar und eine Temperatur von mindestens 31°C, vorzugsweise von mindestens 40°C vor.

Bevorzugt wird der entfernte Lumenfüller und/oder die entfernten Prozeßhilfsstoffe gesammelt und später wieder einer erneuten Verwendung zugeführt.

Die Aufgabe wird auch gelöst durch eine Hohlfaser oder eine Hohlfasermembran, bei der der Lumenfüller und/oder die unerwünschten Prozeßhilfsstoffe gemäß dem Verfahren der Ansprüche 1 bis 7 entfernt sind, dadurch gekennzeichnet, daß die Hohlfaser oder Hohlfasermembran ein Restgehalt von weniger als 500 ppm Isopropylmyristat aufweist.

Der bevorzugte Restgehalt an Isopropylmyristat liegt jedoch unterhalb von 300 ppm.

Die Erfindung wird durch die nachstehenden Beispiele näher erläutert.

### Beispiel 1:

Auf übliche Weise hergestellte Cuprophanhohlfäden mit Isopropylmyristat als Lumenfüller wurden in einem Extraktor den folgenden Versuchsbedingungen ausgesetzt, wobei als überkritisches Gas CO₂ verwendet wurde:
Druck: 100 bar
Temperatur: 40°
Dauer der Extraktion: 1 Stunde

Aus dem obigen ergibt sich eine Dichte des CO₂ von etwa 630 kg/m³. Nach erfolgter Extraktion wiesen die Hohlfasern einen Restgehalt von lediglich 269 ppm Isopropylmyristat auf, während sich die Glycerinbeladung praktisch nicht geändert hatte.

### Beispiele 2 bis 6:

Es wurde gearbeitet wie in Beispiel 1, wobei jedoch die Behandlungsparameter variiert wurden. Die erhaltenen Versuchsbedingungen und Ergebnisse sind in Tabelle 1 wiedergegeben.

**Tabelle 1**

| Beispiel | Druck (bar) | Temperatur (°C) | Dauer (h) | IPM-Gehalt ppm (Mittelwert) |
|---|---|---|---|---|
| 2 | 350 | 60 | 4 | 81 |
| 3 | 350 | 60 | 8 | 225 |
| 4 | 350 | 80 | 8 | 214 |
| 5 | 350 | 40 | 8 | 362 |
| 6 | 350 | 60 | 8 | 224 |

Der Glyceringehalt der einzelnen Hohlfäden bzw. Hohlfadenbündel änderte sich praktisch nicht und bewegte sich etwa zwischen 95 und 99,5% des Ausgangswertes.

Durch den sehr niedrigen Isopropylmyristatgehalt und der Entfernung der übrigen unerwünschten Prozeßhilfsstoffe sind die Hohlfasern hervorragend für die Anwendung im medizinischen Bereich geeignet.

## Patentansprüche

1. Verfahren zum Entfernen eines Lumenfüllers und/oder unerwünschter Prozeßhilfsstoffe aus Hohlfasermembranen für den medizinischen Bereich, welche aus Polymeren bestehen und Porenstabilisatoren und/oder Hydrophilierungsmittel enthalten, dadurch gekennzeichnet, daß die Hohlfasermembranen mit überkritischen Gasen extrahiert werden, wobei solche überkritischen Gase ausgewählt werden, die das Membranpolymer chemisch nicht verändern sowie Porenstabilisatoren und/oder Hydrophilierungsmittel nicht entfernen.

2. Verfahren nach Anspruch 1, dadurch gekennzeichnet, daß überkritische Gase CO₂, H₂O, N₂, NH₃, N₂O, N₂O₂, CH₃OH, CHF₃, n-Butan, Propan, Ethylen, Toluol oder Gemische hiervon verwendet werden.

3. Verfahren nach Anspruch 1 oder 2, dadurch gekennzeichnet, daß dem überkritischen Gas Flüssigkeiten oder Lösungsmittel zugesetzt werden.

4. Verfahren nach Anspruch 3, dadurch gekennzeichnet, daß es sich dabei um Methanol oder Wasser handelt.

5. Verfahren nach einem oder mehreren der Ansprüche 1 bis 4, dadurch gekennzeichnet, daß man das überkritische Gas 1 bis 600 Minuten, vorzugsweise 20 bis 240 Minuten, auf die Hohlfasern oder Hohlfasermembranen einwirken läßt.

6. Verfahren nach einem oder mehreren der Ansprüche 1 bis 5, dadurch gekennzeichnet, daß am Hohlfadenbündel extrahiert wird.

7. Verfahren nach einem oder mehreren der Ansprüche 1 bis 6, dadurch gekennzeichnet, daß bei der Verwendung von CO₂ ein Druck von mindestens 73 bar, vorzugsweise mindestens 100 bar und eine Temperatur von mindestens 31°C, vorzugsweise mindestens 40°C, vorliegt.

8. Verfahren nach einem oder mehreren der Ansprüche 1 bis 7, dadurch gekennzeichnet, daß der entfernte Lumenfüller und/oder die entfernten Prozeßhilfsstoffe gesammelt und einer erneuten Verwendung zugeführt werden.

9. Hohlfaser oder Hohlfasermembran, bei dem der Lumenfüller gemäß dem Verfahren der Ansprüche 1 bis 7 entfernt wurde, dadurch gekennzeichnet, daß die Hohlfaser oder Hohlfasermembran einen Restgehalt von weniger als 500 ppm Isopropylmyristat enthält.

10. Hohlfaser oder Hohlfasermembran nach Anspruch 8, dadurch gekennzeichnet, daß der Restgehalt weniger als 300 ppm Isopropylmyristat beträgt.

## Claims

1. A process for removing a lumen filler and/or unwanted process auxiliaries from hollow-fibre membranes for use in the field of medicine, which are made of polymers and contain pore stabilisers and/or hydrophilizing agents, characterised in that the hollow-fibre membranes are extracted with supercritical gases, whereby supercritical gases are selected which do not chemically alter the membrane polymer or remove pore stabilisers and/or hydrophilizing agents.

2. A process in accordance with Claim 1, characterised in that supercritical gases CO₂, H₂O, N₂, NH₃, N₂O, N₂O₂, CH₃OH, CHF₃, n-butane, propane, ethylene, toluene or mixtures of the same are used.

3. A process in accordance with Claims 1 or 2, characterised in that liquids or solvents are added to the supercritical gas.

4. A process in accordance with Claim 3, characterised in that the liquid or solvent added is methanol or water.

5. A process in accordance with one or more of Claims 1 to 4, characterised in that the supercritical gas is left to act on the hollow fibres or hollow-fibre membranes for 1 to 600 minutes and preferably for 20 to 240 minutes.

6. A process in accordance with one or more of Claims 1 to 5, characterised in that extraction is carried out on the hollow-fibre bundle.

7. A process in accordance with one or more of Claims 1 to 6, characterised in that when CO₂ is used, the pressure is at least 73 bar and preferably at least 100 bar, and the temperature is at least 31°C and preferably at least 40°C.

8. A process in accordance with one or more of Claims 1 to 7, characterised in that the removed lumen filler and/or the removed process auxiliaries are collected and used again in a new application.

9. Hollow fibre or hollow fibre membrane in which the lumen filler has been removed in accordance with the process described in Claims 1 to 7, characterised in that the hollow fibre or hollow fibre membrane has a residual content of less than 500 ppm of isopropyl myristate.

10. Hollow fibre or hollow-fibre membrane in accordance with Claim 8, characterised in that the residual content is less than 300 ppm of isopropyl myristate.

## Revendications

1. Procédé pour débarrasser des membranes à fibres creuses destinées au domaine médical, constituées de polymères et contenant des agents stabilisant des pores et/ou des agents hydrophilisants, de la substance de remplissage servant à la formation de la lumière et/ou des adjuvants de procédé indésirables, caractérisé en ce que les membranes à fibres creuses sont soumises à une extraction par des gaz supercritiques, les gaz supercritiques étant choisis de façon à ce qu'ils ne modifient pas la structure chimique du polymère formant la membrane et qu'ils n'éliminent pas les agents stabilisant les pores et/ou les agents hydrophilisants.

2. Procédé selon la revendication 1, caractérisé en ce que l'on utilise en tant que gaz supercritique du CO₂, du H₂O, du N₂, du NH₃, du N₂O, du N₂O₂, du CH₃OH, du CHF₃, du *n*-butane, du propane, de l'éthylène, du toluène ou des mélanges de ceux-ci.

3. Procédé selon la revendication 1 ou 2, caractérisé en ce que l'on ajoute au gaz supercritique des liquides ou solvants.

4. Procédé selon la revendication 3, caractérisé en ce que lesdits liquides ou solvants sont du méthanol ou de l'eau.

5. Procédé selon une ou plusieurs des revendications 1 à 4, caractérisé en ce que l'on laisse en contact le gaz supercritique pendant 1 à 600 minutes, de préférence pendant 20 à 240 minutes, avec les fibres creuses ou les membranes à fibres creuses.

6. Procédé selon une ou plusieurs des revendications 1 à 5, caractérisé en ce que l'on soumet à l'extraction un faisceau de fibres creuses.

7. Procédé selon une ou plusieurs des revendications 1 à 6, caractérisé en ce que, lorsqu'on utilise du CO₂, la pression est au moins égale à 73 bars, de préférence au moins égale à 100 bars, et la température est au moins égale à 31 °C, de préférence au moins égale à 40 °C.

8. Procédé selon une ou plusieurs des revendications 1 à 7, caractérisé en ce que la substance de remplissage servant à former la lumière et/ou les adjuvants de procédé éliminés sont recueillis et utilisés de nouveau.

9. Fibre creuse ou membrane à fibres creuses débarrassée de la substance de remplissage servant à former la lumière selon le procédé des revendications 1 à 7, caractérisée en ce que la fibre creuse ou la membrane à fibres creuses a une teneur résiduelle en myristate d'isopropyle inférieure à 500 ppm.

10. Fibre creuse ou membrane à fibres creuses selon la revendication 8, caractérisée en ce que la teneur résiduelle en myristate d'isopropyle est inférieure à 300 ppm.
